# EUROPEAN PATENT SPECIFICATION

(11) **EP 3 112 731 B1**
(45) Date of publication and mention of the grant of the patent: **15.08.2018**
(21) Application number: 16176966.6
(22) Date of filing: 29.06.2016
(51) Int. Cl.: F16K 15/14

(54) **PRESHAPED DUCKBILL VALVE**
VORGEFORMTES ENTENSCHNABELVENTIL
CLAPET EN BEC DE CANARD PRÉFORMÉ

(30) Priority: 03.07.2015 NL 2015082
(43) Date of publication of application: 04.01.2017
(73) Proprietor: Avesto Tech B.V., 7575 EE Oldenzaal (NL)
(72) Inventor: NIJLAND, Peter Lodewijk Joannes, 7581DE Losser (NL); SCHOLTEN, Niels, 7591 WL Denekamp (NL); BEKHUIS, Niek Josef, 7642 BL Wierden (NL)
(74) Representative: Mink-Lindenburg, Charlotte Hildegard

(56) References cited:
- EP-A2- 0 863 343
- US-A- 3 901 272
- US-A- 4 709 836

## Description

The present invention relates to a valve for defining a one-way flow having one pair of lips that are arranged in a converging relationship, wherein each lip has a lip base end and a lip outer end, wherein the lip base ends form part of an open valve base end and the lip outer ends are disposed adjacent each other to define one slit, wherein the valve further comprises a flange extending outwardly at the valve base end.

Such a valve is known in the relevant art as a duckbill valve. Duckbill valves are unique, one-piece, elastomeric components that function as backflow prevention devices or one-way valves or check valves. They have elastomeric lips in the shape of a duckbill which prevent backflow and allow forward flow only. The main advantage of duckbill valves over other types of one-way valves is that duckbill valves are self-contained i.e. the critical sealing function is an integral part of the one-piece elastomeric component as opposed to valves where a sealing element has to engage with a smooth seat surface to form a seal. Therefore duckbill valves are easily incorporated and assembled into a wide variety of devices without the problems associated with the surface finish quality of mating seats and/or complex assembly processes. Duckbill valves are available in various elastomeric materials, including medical and food-grade silicone and hydrocarbon-resistant fluorosilicone rubber to handle a broad range of media and temperatures. Areas of application range from long-term service in harsh environments, such as in durable chemical pumps, to the high-volume use in disposable intravenous fluid delivery sets and from one-way valves used in automotive fuel pumps to delicate valves used in tubing circuits for heart surgery, soap dispensers, coffee makers, anti- siphoning valves in shower heads and toys. US 3,901,272 discloses a unidirectional controlled flow valve of the prior art. It is an object of the present invention to provide a duckbill valve of the kind as mentioned above that has improved flow and back flow characteristics. In the valve according to the invention each lip base end runs along one or more substantially straight lines and each lip is provided with one or more folding lines running over the surface of the lip from the lip base end towards the slit.

The lips of the valve according to the invention are connected or hinged to the flange by straight lines. Each straight line defines a folding area, surrounding the straight line, for the lips with respect to the flange that allow the valve to open easily at a low opening pressure while offering a higher flow per unit area. In addition the folding lines preshape the lips in the direction of flow and advantageously reduce the resistance for the opening of the valve. Due to the folding lines tension in the valve or material stress can be avoided.

In the valve according to the invention the straight lines of the valve base end generally form a polygon and at least one of the folding lines starts at an angle of the polygon and ends at the slit. The polygon has many straight lines by which the lip is hinged to the flange. The increased number of straight hinge lines further improves the flow characteristics of the valve according to the present invention.

The polygon may be a parallelogram or a diamond. Both shapes allow for an easy production of the valve according to the invention.

Preferably at least one of the folding lines is a straight line that more preferably runs substantially perpendicular with respect to the slit.

In a further preferred embodiment two or more folding lines run over the surface of the lip from the lip base end converging in the direction of the slit. More folding lines preshape the lips even better in the direction of flow and further reduce the resistance for the opening of the valve.

Preferably a number of the lip sections are curved in two mutually perpendicular directions. The curved surface of the lip sections significantly reduces the resistance for the opening of the valve.

Preferably the slit is arcuate or at an angle. Both preferred embodiments allow for a larger slit to be formed in a valve of the same width that will allow the valve to open further allowing a larger flow.

These and other features and advantages of the invention will be more apparent with a discussion of various preferred embodiments of the invention and reference to the associated drawings.

The invention will be explained in more detail with reference to the appended drawings, in which:
Fig. 1A schematically shows a first preferred embodiment of a valve according to the present invention;
Fig. 1B schematically shows the valve of figure 1A in top view;
Fig. 2A schematically shows a first variant of the valve of figure 1A in closed position;
Fig. 2B schematically shows the valve of figure 2A in an open position;
Fig. 3A schematically shows a second variant of the valve of figure 1A;
Fig. 3B schematically shows a third variant of the valve of figure 1A;
Fig. 3C schematically shows a fourth variant of the valve of figure 1A;
Fig. 4A shows a second preferred embodiment of a valve according to the present invention; and
Fig. 4B shows a third preferred embodiment of a valve according to the present invention.

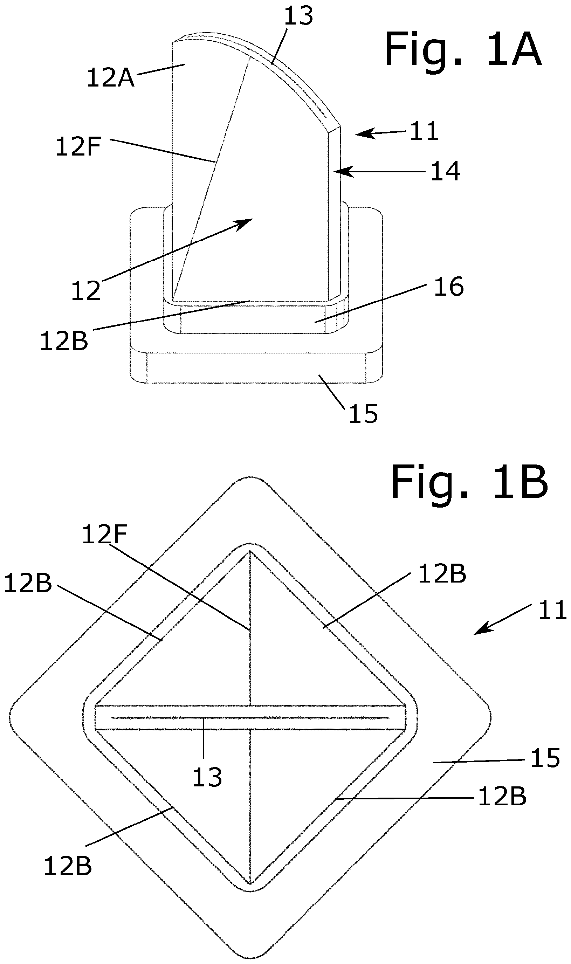

Figure 1A schematically shows a first preferred embodiment of the valve 11 according to the invention. Figure 1B shows valve 11 schematically in top view. Valve 11 comprises one pair of lips 12 that extend in a converging relationship from a valve base to a slit 13. Each lip 12 has a lip base end 12B and a lip outer end 12A. The lip base ends 12B form part of the open valve base end. The lip outer ends 12A are disposed adjacent each other to define the slit 13.

Each lip base end 12B runs over two substantially straight lines that are at an angle. According to the invention each lip 12 is provided with a folding line 12F defining a folding area running over the surface of the lip 12. The folding line 12F starts at the angle between the straight lines of the lip base end 12B and ends at the slit 13. The folding line 12F runs substantially perpendicular with respect to the slit 13. The lips 12 are interconnected at the sides 14.

According to the invention the valve base end 12B has a generally parallelogram shape that can clearly be seen in the top view of figure 1B. In the first preferred embodiment the lip base end 12B has a generally diamond shape. In valve 11 slit 13 runs substantially diagonal with respect to the valve base end.

Valve 11 further comprises a flange 15 extending outwardly at the valve base end. In the second preferred embodiment of valve 11 the flange 15 has one or more straight sides. More specifically the flange 15 has two opposing straight sides. In the preferred embodiment shown the flange 15 has a generally square shape. The straight sides are interconnected by slightly curved corners.

A transition part 16 is arranged between the flange 15 and the lips 12. The transition part 16 allows a flange shape other than a parallelogram, e.g. circular.

In the valve 11 the folding line divides the lip 12 in two sections having a substantially curved surface. The lip sections are curved in two mutually perpendicular directions.

The folding line 12F is a straight line that runs substantially perpendicular with respect to the slit 13.

The slit 13 is arcuate and curved outwardly.

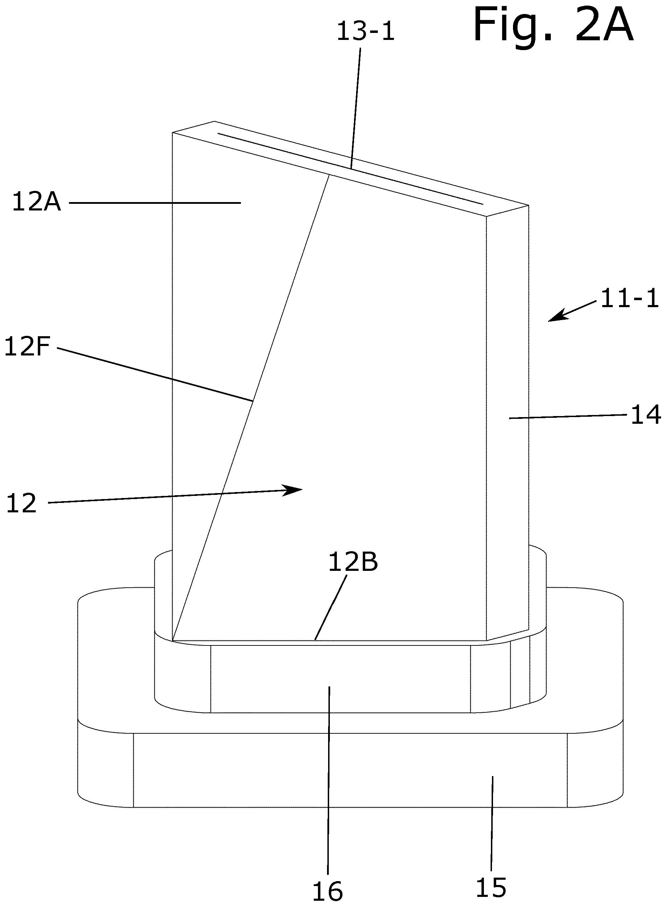

Fig. 2A schematically shows a first variant 11-1 of the valve of figure 1A in closed position. In the variant 11-1 the slit 13-1 is formed by one substantially horizontal line in the centre. The folding line 12F runs over the surface of the lip 12 from the angle between the straight lines of the lip base end 12B toward the centre of the slit 13-1. Other than the slit 13-1 the variant 11-1 is identical to the embodiment of figures 1A.

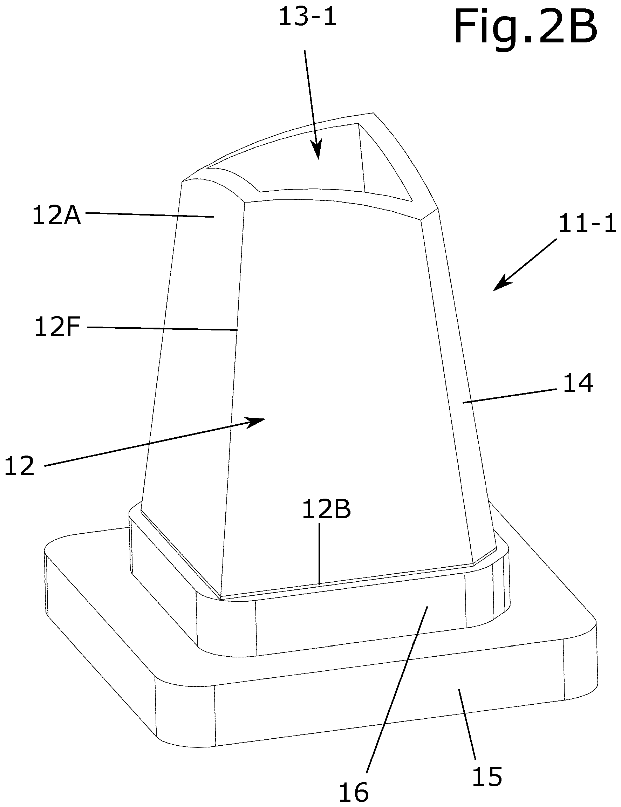

Fig. 2B schematically shows the valve 11-1 in an open position. The folding lines 12F preshape the lips 12 and contribute to a low opening pressure of the valve 11-1.

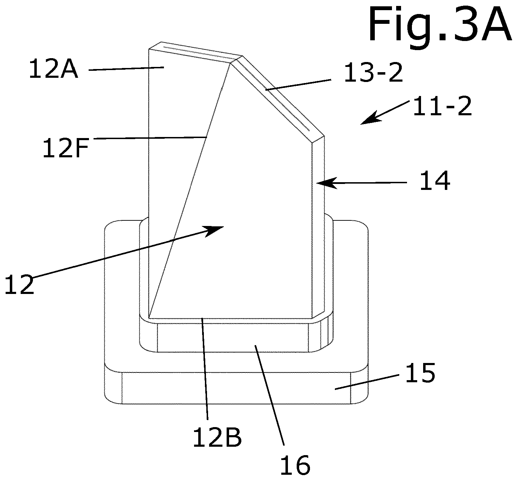

Fig. 3A schematically shows a second variant of the valve of figure 1A. In the variant 11-2 the slit 13-2 is formed by straight lines at an angle that lies in the centre. The folding line 12F runs over the surface of the lip 12 from the angle between the straight lines of the lip base end 12B toward the angle in the slit 13-2. Other than the slit 13-2 the variant 11-2 is identical to the embodiments of figures 1A and 2A.

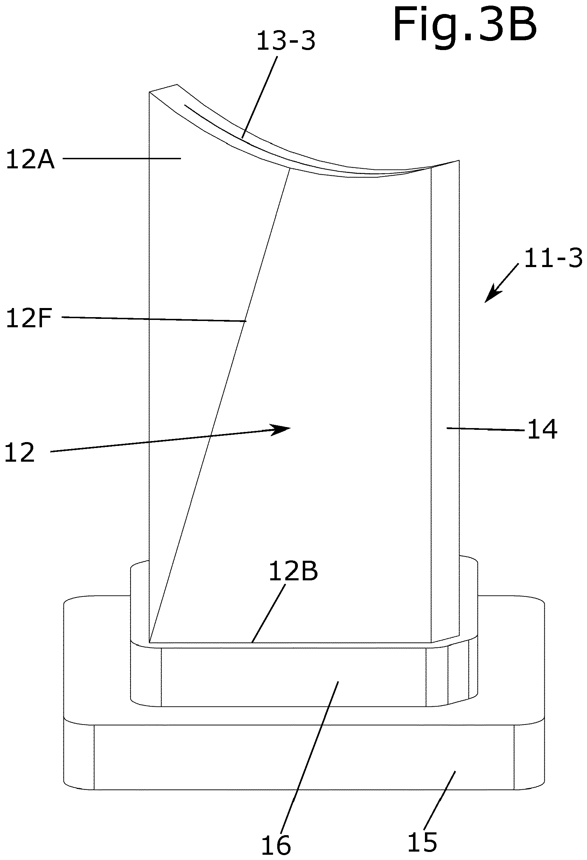

Fig. 3B schematically shows a third variant 11-3 of the valve of figure 1A. In the variant 11-3 the slit 13-3 is arcuate, but curved inwardly. The folding line 12F runs over the surface of the lip 12 from the angle between the straight lines of the lip base end 12B toward the centre of the slit 13-3. Other than the slit 13-3 the variant 11-3 is identical to the embodiments of figures 1A, 2A and 3A.

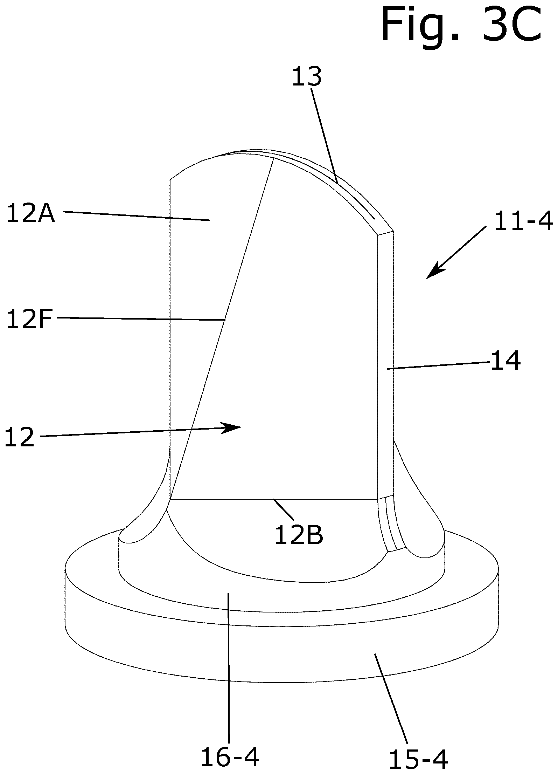

Fig. 3C schematically shows a fourth variant 11-4 of the valve of figure 1A. In the variant 11-4 the flange 15-4 is circular. The transition part 16-4 is adapted to connect the valve base end of the lips 12 to the flange 15-4. Other than the flange 15-4 the variant 11-4 is identical to the embodiments of figures 1A, 2A, 3A and 3B.

All the preferred embodiments shown in figures 1A through 3B share the concept of a generally diamond shaped open valve base end formed by generally straight lip base ends, wherein the slit runs substantially diagonal with respect to the valve base end and each lip is provided with one folding line that starts at an angle of the diamond and ends at the slit.

The shape of the slit can vary so a larger slit can be formed in a valve of the same width that will allow the valve to open further allowing a larger flow.

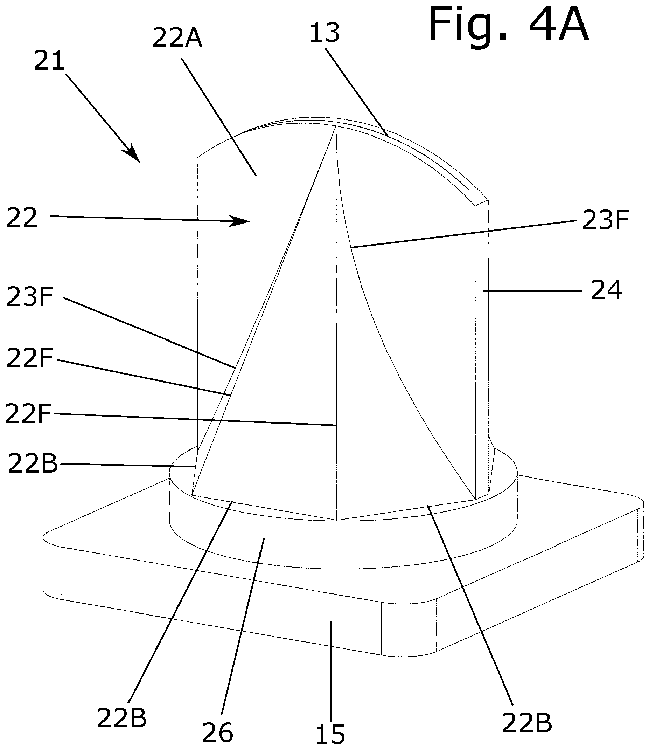

Fig. 4A shows a second preferred embodiment of a valve 21 according to the present invention. The straight lines 22B of the valve base end form a hexagon. Two folding lines 22F run over the surface of the lip 22 from adjacent angles of the hexagon converging in the direction of the slit 13, more specifically at the slit 13, preferably at the centre of the slit. At both sides of folding lines 22F two additional folding lines 23F start from adjacent angles of the hexagon and converge at the same point of the slit 13. Consequently the lip 22 is divided in five lip sections.

The transition part 26 has a general circular shape and is arranged between the flange 15 and the lips 22.

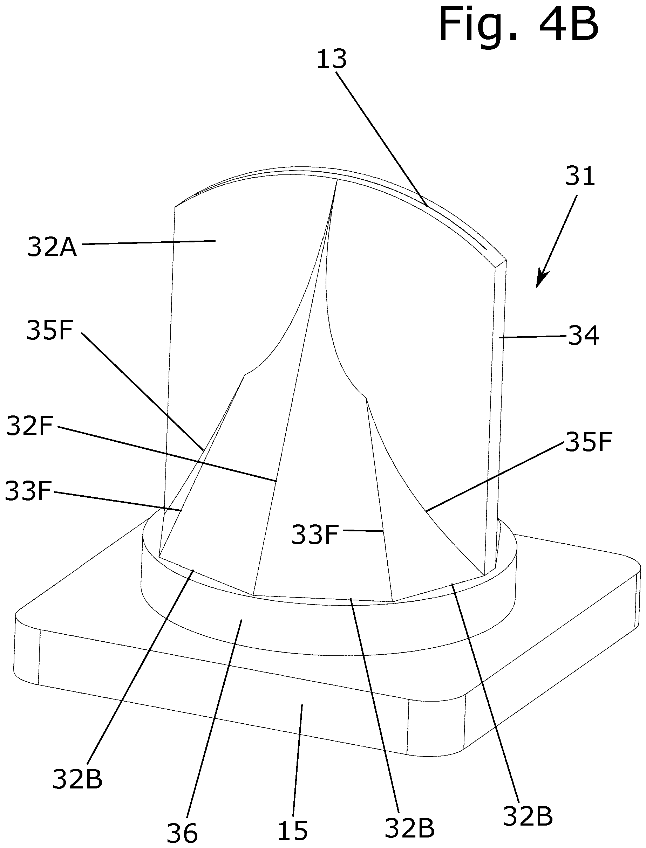

Fig. 4B shows a third preferred embodiment of a valve 31 according to the present invention. The straight lines 32B of the valve base end form an octagon. One central folding line 32F runs over the surface of the lip 32 from one angle of the octagon toward the slit 13, preferably toward the centre of the slit. At both sides of folding line 32F a pair of two additional folding lines 33F and 35F start from adjacent angles of the octagon and converge into one folding line that in turn converges with the central folding line 32F at the slit 13. Consequently the lip 32 is divided in six lip sections.

Generally the invention is based on the inventive thought of providing a one-way valve, specifically a duckbill valve, having lips that are preshaped by lines. Each lip base end runs along one or more substantially straight lines and each lip is provided with one or more folding lines running over the surface of the lip from the lip base end towards the slit. The combination of technical features of the valve according to the invention truly approximate the appearance of a duckbill.

The straight lines of the valve base end generally form a polygon and at least one of the folding lines starts at an angle of the polygon and ends at the slit. The folding lines contribute significantly to enhance the flow characteristics of the valve.

It is noted that all possible combinations of the preferred embodiments and their variants shown are possible within the scope of the invention. In particular the various technical measures of the alternative embodiments of the lips and the slits of the valve shown in the accompanying figures can be combined to form other alternative embodiments which are to be incorporated herein.

The valve according to the invention is preferably universally suitable and can be manufactured in a range of sizes. The valve is designed for cost effective production thus facilitating the use as a disposable article.

Although the preferred embodiment of the valve has been described in the context of a one-way valve for medical application, more specifically a purge valve, the invention is not limited thereto. A person skilled in the art will have no difficulty making small changes to the valve, such as scaling it up, in order to render it suitable for a particular intended use outside this field.

## Claims

1. Valve (11, 11-1, 11-2, 11-3, 11-4, 21, 31)for defining a one way flow, having one pair of lips (12, 22, 32) that are arranged in a converging relationship, wherein each lip has a lip base end (12B, 22B, 32B) and a lip outer end (12A, 22A, 32A), wherein the lip base ends form part of an open valve base end and the lip outer ends are disposed adjacent each other to define one slit (13, 13-1, 13-2, 13-3), wherein the valve further comprises a flange (15, 15-4) extending outwardly at the valve base end, wherein each lip base end runs along one or more substantially straight lines (12B, 22B, 32B), wherein the lips are interconnected at the sides (14, 24, 34) and the straight lines (12B, 22B, 32B) of the lip base end generally form a polygon **characterized in that** each lip (12, 22, 32) is provided with one or more folding lines (12F, 22F, 23F, 32F, 33F, 35F) running over the surface of the lip from the lip base end towards the slit and at least one of the folding lines (12F, 22F, 23F, 32F, 33F, 35F) starts at an angle of the polygon and ends at the slit.

2. Valve according to claim 1, wherein the straight lines (12B) of the lip base end generally form a parallelogram and at least one of the folding lines (12F) starts at an angle of the parallelogram and ends at the slit (13, 13-1, 13-2, 13-3).

3. Valve according to claim 1 or 2, wherein at least one of the folding lines (12F, 22F, 32F) is a straight line.

4. Valve according to one or more of the preceding claims, wherein at least one of the folding lines (12F, 32F) runs substantially perpendicular with respect to the slit (13, 13-1, 13-2, 13-3).

5. Valve according to one or more of the preceding claims, wherein two or more folding lines (22F, 23F, 32F, 33F, 35F) run over the surface of the lip (22, 32) from the lip base end (22B, 32B) converging in the direction of the slit (13).

6. Valve according to one or more of the preceding claims, wherein the folding lines (12F, 22F, 23F, 32F, 33F, 35F) divide the lip (12, 22, 32) in two or more lip sections having a substantially curved surface.

7. Valve according to claim 6, wherein a number of the lip sections are curved in two mutually perpendicular directions.

8. Valve according to one or more of the preceding claims, wherein the valve base end generally forms a parallelogram and the slit (13, 13-1, 13-2, 13-3) runs substantially diagonal with respect to the valve base end.

9. Valve according to one or more of the preceding claims, wherein the valve base end generally forms a diamond and the slit (13, 13-1, 13-2, 13-3) runs substantially diagonal with respect to the valve base end.

10. Valve according to one or more of the preceding claims, wherein the slit (13, 13-3) is arcuate.

11. Valve according to one or more of the preceding claims 1-9, wherein the slit (13-2) is at an angle.

## Patentansprüche

1. Ventil (11, 11-1, 11-2, 11-3, 11-4, 21, 31) zum Definieren einer Einwegströmung mit einem Paar Lippen (12, 22, 32), die in einem konvergierenden Verhältnis angeordnet sind, wobei jede Lippe ein Lippenbasisende (12B, 22B, 32B) und ein äußeres Lippenende (12A, 22A, 32A) aufweist, wobei die Lippenbasisenden einen Teil eines offenen Ventilbasisendes bilden und die äußeren Lippenenden benachbart angeordnet sind, um jeweils einen Schlitz (13, 13-1, 13-2, 13-3)zu definieren, wobei das Ventil ferner einen Flansch (15, 15-4) umfasst, der sich am Ventilbasisende nach außen erstreckt, wobei jedes Lippenbasisende entlang einer oder mehrerer im Wesentlichen gerader Linien (12B, 22B, 32B) verläuft, wobei die Lippen an den Seiten (14, 24, 34) miteinander verbunden sind und die geraden Linien (12B, 22B, 32B) des Lippenbasisendes im Allgemeinen ein Polygon ausbilden, **dadurch gekennzeichnet, dass** jede Lippe (12, 22, 32) mit einer oder mehreren Faltlinien (12F, 22F, 23F, 32F, 33F, 35F) versehen ist, die über die Oberfläche der Lippe vom Lippenbasisende zum Schlitz hin verlaufen und dass mindestens eine der Faltlinien (12F, 22F, 23F, 32F, 33F, 35F) an einem Winkel des Polygons beginnt und am Schlitz endet.

2. Ventil nach Anspruch 1, wobei die geraden Linien (12B) des Lippenbasisendes im Allgemeinen ein Parallelogramm bilden und mindestens eine der Faltlinien (12F) an einem Winkel des Parallelogramms beginnt und am Schlitz (13, 13-1, 13-2, 13-3) endet.

3. Ventil nach Anspruch 1 oder 2, wobei mindestens eine der Faltlinien (12F, 22F, 32F) eine gerade Linie ist.

4. Ventil nach einem oder mehreren der vorhergehenden Ansprüche, wobei mindestens eine der Faltlinien (12F, 32F) im Wesentlichen senkrecht in Bezug auf den Schlitz (13, 13-1, 13-2, 13-3) verläuft.

5. Ventil nach einem oder mehreren der vorhergehenden Ansprüche, wobei zwei oder mehr Faltlinien (22F, 23F, 32F, 33F, 35F) vom Lippenbasisende (22B, 32B) über die Oberfläche der Lippe (22, 32) verlaufen, wobei sie in Richtung des Schlitzes (13) konvergieren.

6. Ventil nach einem oder mehreren der vorhergehenden Ansprüche, wobei die Faltlinien (12F, 22F, 23F, 32F, 33F, 35F) die Lippe (12, 22, 32) in zwei oder mehr Lippenabschnitte mit einer im Wesentlichen gekrümmten Oberfläche teilen.

7. Ventil nach Anspruch 6, wobei eine Anzahl der Lippenabschnitte in zwei zueinander senkrechten Richtungen gekrümmt sind.

8. Ventil nach einem oder mehreren der vorhergehenden Ansprüche, wobei das Ventilbasisende im Allgemeinen ein Parallelogramm bildet und der Schlitz (13, 13-1, 13-2, 13-3) im Wesentlichen diagonal in Bezug auf das Ventilbasisende verläuft.

9. Ventil nach einem oder mehreren der vorhergehenden Ansprüche, wobei das Ventilbasisende im Allgemeinen einen Diamanten bildet und der Schlitz (13, 13-1, 13-2, 13-3) im Wesentlichen diagonal in Bezug auf das Ventilbasisende verläuft.

10. Ventil nach einem oder mehreren der vorhergehenden Ansprüche, wobei der Schlitz (13, 13-3) bogenförmig ist.

11. Ventil nach einem oder mehreren der vorhergehenden Ansprüche 1-9, wobei der Schlitz (13-2) in einem Winkel angeordnet ist.

## Revendications

1. Valve (11, 11-1, 11-2, 11-3, 11-4, 21, 31) pour définir un écoulement à sens unique, ayant une paire de lèvres (12, 22, 32) qui sont disposées selon une relation convergente, chaque lèvre ayant une extrémité de base de lèvre (12B, 22B, 32B) et une extrémité extérieure de lèvre (12A, 22A, 32A), les extrémités de base des lèvres faisant partie d'une extrémité de base de valve ouverte et les extrémités extérieures des lèvres étant disposées l'une à côté de l'autre pour définir une fente (13, 13-1, 13-2, 13-3), la valve comprenant en outre une bride (15, 15-4) s'étendant vers l'extérieur à l'extrémité de base de valve, chaque extrémité de base de lèvre s'étendant le long d'une ou plusieurs lignes sensiblement droites (12B, 22B, 32B), les lèvres étant interconnectées sur les côtés (14, 24, 34) et les lignes droites (12B, 22B, 32B) de l'extrémité de base de lèvre formant généralement un polygone, **caractérisé en ce que** chaque lèvre (12, 22, 32) est munie d'une ou plusieurs lignes de pliage (12F, 22F, 23F, 32F, 33F, 35F) s'étendant sur la surface de la lèvre depuis l'extrémité de base de lèvre vers la fente, et au moins une des lignes de pliage (12F, 22F, 23F, 32F, 33F, 35F) commence à un angle du polygone et se termine à la fente.

2. Valve selon la revendication 1, dans laquelle les lignes droites (12B) de l'extrémité de base de lèvre ont une forme générale de parallélogramme et au moins l'une des lignes de pliage (12F) commence à un angle du parallélogramme et se termine à la fente (13, 13-1, 13-2, 13-3).

3. Valve selon la revendication 1 ou 2, dans laquelle au moins l'une des lignes de pliage (12F, 22F, 32F) est une ligne droite.

4. Valve selon l'une ou plusieurs des revendications précédentes, dans laquelle au moins l'une des lignes de pliage (12F, 32F) s'étend de façon sensiblement perpendiculaire à la fente (13, 13-1, 13-2, 13-3).

5. Valve selon l'une ou plusieurs des revendications précédentes, dans laquelle deux ou plusieurs lignes de pliage (22F, 23F, 32F, 33F, 35F) s'étendent sur la surface de la lèvre (22, 32) depuis l'extrémité de base de lèvre (22B, 32B) en convergeant en direction de la fente (13).

6. Valve selon l'une ou plusieurs des revendications précédentes, dans laquelle les lignes de pliage (12F, 22F, 23F, 32F, 33F, 35F) divisent la lèvre (12, 22, 32) en deux ou plusieurs sections de lèvre ayant une surface sensiblement incurvée.

7. Valve selon la revendication 6, dans laquelle un certain nombre de sections de lèvre sont incurvées dans deux directions mutuellement perpendiculaires.

8. Valve selon l'une ou plusieurs des revendications précédentes, dans laquelle l'extrémité de base de valve a une forme générale de parallélogramme et la fente (13, 13-1, 13-2, 13-3) s'étend sensiblement en diagonale par rapport à l'extrémité de base de valve.

9. Valve selon l'une ou plusieurs des revendications précédentes, dans laquelle l'extrémité de base de valve a une forme générale de losange et la fente (13, 13-1, 13-2, 13-3) s'étend sensiblement en diagonale par rapport à l'extrémité de base de valve.

10. Valve selon l'une ou plusieurs des revendications précédentes, dans laquelle la fente (13, 13-3) est courbée.

11. Valve selon l'une ou plusieurs des revendications 1-9 précédentes, dans laquelle la fente (13-2) est inclinée.
